# EUROPÄISCHE PATENTSCHRIFT

(11) **EP 1 467 863 B1**
(45) Veröffentlichungstag und Bekanntmachung des Hinweises auf die Patenterteilung: **11.01.2006**
(21) Anmeldenummer: 03704406.2
(22) Anmeldetag: 16.01.2003
(51) Int. Cl.: B32B 27/00, B32B 7/12

(54) **VERWENDUNG VON POLYHYDROXYFUNKTIONALISIERTEN ALKANEN ALS HAFTVERMITTLER IN VERBUNDEN AUS BESCHICHTUNG, KLEBSCHICHT UND VERBUNDGLASSCHEIBE SOWIE VERBUNDE DIESER ART, VERFAHREN ZU IHRER HERSTELLUNG UND IHRE VERWENDUNG**
USE OF POLYHYDROXY FUNCTIONALIZED ALKANES AS ADHESION PROMOTERS IN COMPOSITES CONSISTING OF A COATING, GLUED LAYER AND COMPOSITE GLASS PANEL, IN ADDITION TO COMPOSITES OF THIS TYPE, A METHOD FOR THEIR PRODUCTION AND THE USE THEREOF
UTILISATION D'ALCANES FONCTIONNALISES POLYHYDROXY COMME AGENTS ADHESIFS DANS DES COMPOSITES CONSTITUES D'UN REVETEMENT, D'UNE COUCHE DE COLLE ET D'UNE VITRE COMPOSITE, COMPOSITES DE CE TYPE, LEUR PROCEDE DE PRODUCTION ET LEUR UTILISATION

(30) Priorität: 25.01.2002 DE 10202819
(43) Veröffentlichungstag der Anmeldung: 20.10.2004
(73) Patentinhaber: BASF Coatings AG, 48165 Münster (DE)
(72) Erfinder: BAUMGART, Hubert, 48163 Münster (DE); MAYENFELS, Peter, 48163 Münster (DE); SCHULZE-FINKENBRINK, Guido, 48163 Münster (DE)
(74) Vertreter: Fitzner, Ulrich
(86) Internationale Anmeldenummer: PCT/EP2003/000374
(87) Internationale Veröffentlichungsnummer: WO 2003/061965

(56) Entgegenhaltungen:
- WO-A-01/85820
- DE-A- 19 809 643
- DE-A- 19 924 674

## Beschreibung

Die vorliegende Erfindung betrifft die Verwendung speziell ausgewählter polyhydroxyfunktionalisierter Alkane als Haftvermittler in Verbunden aus Beschichtung, Klebschicht und Scheibe. Außerdem betrifft die vorliegende Erfindung neue Verbunde aus Beschichtung, Klebschicht und Scheibe. Des weiteren betrifft die vorliegende Erfindung ein neues Verfahren zur Herstellung von Verbunden aus Beschichtung, Klebschicht und Scheibe. Nicht zuletzt betrifft die vorliegende Erfindung die Verwendung der neuen Verbunde oder der mit Hilfe des neuen Verfahrens hergestellten Verbunde bei der Herstellung von Kraftfahrzeugen.

Für die Kraftfahrzeugserienlackierung, insbesondere die Automobilserienlackierung von hoher Qualität, werden bekanntermaßen farb- und/oder effektgebende Mehrschichtlackierungen aus Primer, Elektrotauchlackierung, Füllerlackierung oder Steinschlagschutzgrundierung, Basislackierung und Klarlackierung verwendet. Die Klarlackierungen müssen hohe Anforderungen hinsichtlich der optischen und ästhetischen Eigenschaften (Appearance) sowie der Härte, Kratzfestigkeit, Chemikalienbeständigkeit, Etch-Beständigkeit und Witterungsstabilität erfüllen. Darüber hinaus müssen sie auch noch die Fähigkeit besitzen, dass sie mit Verbundglasscheiben, die auf ihnen mit Klebschichten fixiert sind, einen Verbund bilden, der auch unter extremen und/oder rasch wechselnden Praxisbedingungen dauerhaft ist. Die bisher bekannten Verbunde lassen in dieser. Hinsicht zu wünschen übrig und müssen weiter verbessert werden.

Polyhydroxyfunktionalisierte, cyclische und/oder acyclische Alkane mit 9 bis 16 Kohlenstoffatomen im Molekül; wie die stellungsisomeren Diethyloctandiole, sind bereits als Reaktiwerdünner für die thermische Härtung in thermisch oder thermisch und mit aktinischer Strahlung härtbaren Beschichtungsstoffen, in Bautenanstrichstoffen, als Reaktionsmedium für die Herstellung von Acrylatcopolymerisaten, als Synthesebaustein für die Herstellung von Oligomeren und Polymeren und als Reaktionsmedium für die Herstellung harnstoffgruppenhaltiger Thixotropierungsmittel verwendet worden. Hierzu wird auf die deutschen Patentanmeldungen DE 198 09 643 A 1, DE 198 50 243 A 1, DE 198 55 167 A 1, DE 199 24 674 A 1, DE 199 38 758 A 1 und DE 199 40 855 A 1 oder die nicht vorveröffentlichte deutsche Patentanmeldung DE 100 01 493 verwiesen. Im allgemeinen weisen die farb- und/oder effektgebenden Mehrschichtlackierungen, die aus Beschichtungsstoffen hergestellt wurden, die polyhydroxyfunktionalisierte, cyclische und/oder acyclische Alkane mit 9 bis 16 Kohlenstoffatomen im Molekül enthalten, eine sehr gute Zwischenschichthaftung zur Basislackierung auf. Die Verwendung dieser polyhydroxyfunktionalisierten Alkane als Haftvermittler in Verbunden aus Beschichtung, Klebschicht und Scheibe geht aus den Patentanmeldungen nicht hervor oder wird darin nicht beschrieben.

Aufgabe der vorliegenden Erfindung ist es, einen neuen Verbund aus Beschichtung, Klebschicht und Scheibe zur Verfügung zu stellen, der die Nachteile des Standes der Technik nicht mehr aufweist, sondern der weitgehend unabhängig von den bei seiner Herstellung herrschenden Bedingungen, insbesondere was Temperatur und Luftfeuchtigkeit betrifft, auch unter extremen Bedingungen auf Dauer fest ist. Insbesondere soll der Verbund bei hohen und niederen Temperaturen, hoher und niedriger Luftfeuchtigkeit sowie unter rasch zwischen diesen Extremen wechselnden Bedingungen, wie sie im Tropenklima und im Wüstenklima herrschen, bei hoher Strahlungsintensität und bei intensiver mechanischer und chemischer Belastung keine Beschädigung erleiden.

Demgemäß wurde die neue Verwendung von polyhydroxyfunktionalisierten cyclischen und/oder acyclischen Alkanen mit 9 bis 16 Kohlenstoffatomen als Haftvermittler in Verbunden aus Beschichtung, Klebschicht und Scheibe gefunden, die im folgenden als »erfindungsgemäße Verwendung« bezeichnet wird.

Außerdem wurde der neue Verbund aus Substrat (A), Beschichtung (B), Klebschicht (C) und Scheibe (D) gefunden, der herstellbar ist, indem man
(I) einen physikalisch, thermisch, mit aktinischer Strahlung oder thermisch und mit aktinischer Strahlung härtbaren Beschichtungsstoff (B), enthaltend mindestens ein polyhydroxyfunktionalisiertes cyclisches und/oder acyclisches Alkan mit 9 bis 16 Kohlenstoffatomen auf ein unbeschichtetes oder vorbeschichtetes Substrat (A) appliziert, wodurch die Schicht (B) resuliert,
(II) die Schicht (B) für sich alleine oder zusammen mit mindestens einer darunter befindlichen Schicht (B-n) aus einem anderen Beschichtungsstoff (B-n) härtet, wodurch die Beschichtung (B) oder (B)/(B-n) resultiert,
(III) auf die Beschichtung (B), in dem Bereich, in dem das Substrat (A) mit der Scheibe (D) über die Beschichtung (B) und die Klebschicht (C) verbunden werden soll, einen Klebstoff (C) appliziert, wodurch die Klebstoffschicht (C) resultiert, und
(IV) die Klebstoffschicht (C) mit der Scheibe verbindet und aushärtet, wodurch die Klebschicht (C) resultiert. Im folgenden wird der neue Verbund aus Substrat (A), Beschichtung (B), Klebschicht (C) und Scheibe (D) als »erfindungsgemäßer Verbund« bezeichnet.

Weitere Erfindungsgegenstände gehen aus der Beschreibung hervor.

Im Hinblick auf den Stand der Technik war es überraschend und für den Fachmann nicht vorhersehbar, dass die Aufgabe, die der vorliegenden Erfindung zugrundelag, mit Hilfe der erfindungsgemäßen Verwendung und des erfindungsgemäßen Verbundes gelöst werden konnte.

Insbesondere war es überraschend, dass der erfindungsgemäße Verbund weitgehend unabhängig von den bei seiner Herstellung herrschenden Bedingungen, insbesondere was Temperatur und Luftfeuchtigkeit betraf, auch unter extremen Bedingungen auf Dauer fest war und keine Beschädigungen, wie Risse oder Ablösungen, aufwies. Vor allem war der erfindungsgemäße Verbund auch bei hohen und niederen Temperaturen, hoher und niedriger Luftfeuchtigkeit sowie unter rasch zwischen diesen Extremen wechselnden Bedingungen, wie sie im Tropenklima und im Wüstenklima herrschen, bei hoher Strahlungsintensität und bei intensiver mechanischer und chemischer Belastung stabil und erlitt keine Beschädigung.

Erfindungsgemäß werden die polyhydroxylfunktionalisierten cyclischen und/oder acyclischen Alkane mit 9 bis 16 Kohlenstoffatomen im Molekül als Haftvermittler in dem erfindungsgemäßen Verbund verwendet. Vorzugsweise liegen die erfindungsgemäß zu verwendenden Alkane in den Beschichtungsstoffen (B) vor, aus denen die Beschichtungen (B) hergestellt werden.

Die erfindungsgemäß zu verwendenden Alkane sind mit mindestens zwei, insbesondere zwei, Hydroxylgrupppen funktionalisiert.

Die funktionalisierten Alkane leiten sich ab von verzweigten, cyclischen oder acyclischen Alkanen mit 9 bis 16 Kohlenstoffatomen, welche jeweils das Grundgerüst bilden.

Beispiele geeigneter Alkane dieser Art mit 9 Kohlenstoffatomen sind 2-Methyloctan, 4-Methyloctan, 2,3-Dimethyl-heptan, 3,4-Dimethyl-heptan, 2,6-Dimethyl-heptan, 3,5-Dimethyl-heptan, 2-Methyl-4-ethyl-hexan oder Isopropyl-cyclohexan.

Beispiele geeigneter Alkane dieser Art mit 10 Kohlenstoffatomen sind 4-Ethyloctan, 2,3,4,5-Tetramethyl-hexan, 2,3-Diethyl-hexan oder 1-Methyl-2-n-propyl-cyctohexan.

Beispiele geeigneter Alkane dieser Art mit dem 11 Kohlenstoffatomen sind 2,4,5,6-Tetramethyl-heptan oder 3-Methyl-6-ethyl-octan.

Beispiele geeigneter Alkane dieser Art mit 12 Kohlenstoffatomen sind 4-Methyl-7-ethyl-nonan, 4,5-Diethyl-octan, 1'-Ethyl-butyl-cyclohexan, 3,5-Diethyl-octan oder 2,4-Diethyl-octan.

Beispiele geeigneter Alkane dieser Art mit 13 Kohlenstoffatomen sind 3,4-Dimethyl-5-ethyl-nonan oder 4,6-Dimethyl-5-ethyl-nonan.

Ein Beispiel eines geeigneten Alkans dieser Art mit 14 Kohlenstoffatomen ist 3,4-Dirnethyl-7-ethyl-decan.

Beispiele geeigneter Alkane dieser Art mit 15 Kohlenstoffatomen sind 3,6-Diethyl-undecan oder 3,6-Dimethyl-9-ethyl-undecan.

Beispiele geeigneter Alkane dieser Art mit 16 Kohlenstoffatomen sind 3,7-Diethyl-dodecan oder 4-Ethyl-6-isopropyl-undecan.

Von diesen Grundgerüsten sind die Alkane mit 10 bis 14 und insbesondere 12 Kohlenstoffatomen besonders vorteilhaft und werden deshalb bevorzugt verwendet. Von diesen sind wiederum die Octanderivate, insbesondere die stellungsisomeren Dialkyloctandiole, speziell die Diethyloctandiole, ganz besonders vorteilhaft.

Vorzugsweise sind die funktionalisierten Alkane, die sich von diesen verzweigten, cyclischen oder acyclischen Alkanen als Grundgerüsten ableiten, bei Raumtemperatur flüssig. Somit können entweder einzelne flüssige funktionalisierte Alkane verwendet werden oder flüssige Gemische dieser Verbindungen. Dies ist insbesondere dann der Fall, wenn funktionalisierte Alkane verwendet werden, welche wegen ihrer hohen Anzahl an Kohlenstoffatomen im Atkan-Grundgerüst als einzelne Verbindungen fest sind. Der Fachmann kann daher die entsprechenden funktionalisierten Alkane in einfacher Weise auswählen.

Es ist außerdem von Vorteil, wenn die funktionalisierten Alkane einen Siedepunkt von über 200, vorzugsweise 220 und insbesondere 240 °C aufweisen. Darüberhinaus sollen sie eine niedrige Verdampfungsrate haben.

Es ist des weiteren von Vorteil, wenn die funktionalisierten Alkane acyclisch sind.

Die funktionalisierten Alkane weisen primäre und/oder sekundäre Hydroxlgruppen auf. Vorzugsweise sind primäre und sekundäre Gruppen dieser Art in einem funktionalisierten Alkan vorhanden.

Die ganz besonders bevorzugt zu verwendenden stellungsisomeren Diethyloctandiole enthalten eine lineare C₈-Kohlenstoffkette.

Bezüglich der beiden Ethylgruppen weist die C₈-Kohlenstoffkette das folgende Substitutionsmuster auf: 2,3, 2,4, 2,5, 2,6, 2,7, 3,4, 3,5, 3,6 oder 4,5. Erfindungsgemäß ist es von Vorteil, wenn die beiden Ethylgruppen in 2,4-Stellung stehen, d. h., daß es sich um 2,4-Diethyloctandiole handelt.

Bezüglich der beiden Hydroxylgruppen weist die C₈-Kohlenstoffkette das folgende Substitutionsmuster auf: 1,2, 1,3, 1,4, 1,5, 1,6, 1,7, 1,8, 2,3, 2,4, 2,5, 2,6, 2,7, 2,8, 3,4, 3,5, 3,6, 3,7, 3,8, 4,5, 4,6, 4,8, 5,6, 5,7, 5,8, 6,7, 6,8 oder 7,8. Erfindungsgemäß ist es von Vorteil, wenn die beiden Hydroxylgruppen in 1,5-Stellung stehen, d. h., daß es sich um Diethyloctan-1,5-diole handelt.

Die beiden Substitutionsmuster werden in beliebiger Weise miteinander kombiniert, d. h., daß es sich bei den erfindungsgemäß zu verwendenden Diethyloctandiolen um
2,3-Diethyloctan-1,2-, -1,3-, -1,4-, -1,5-, -1,6-, -1,7-, -1,8-, -2,3-, -2,4-, -2,5-, -2,6-, -2,7-, -2,8-, -3,4-, -3,5-, -3,6-, -3,7-, -3,8-, -4,5-, -4,6-, -4,7-, -4,8-, -5,6 -, -5,7-, -5,8-, -6,7-, -6,8- oder -7,8-diol,
2,4-Diethyloctan-1,2-, -1,3-, -1,4-, -1,5-, -1,6-, -1,7-, -1,8-, -2,3-, -2,4-, -2,5-, -2,6-, -2,7-, -2,8-, -3,4-, -3,5-, -3,6-, -3,7-, -3,8 -, -4,5-, -4,6-, -4,7-, -4,8-, -5,6 -, -5,7-, -5,8-, -6,7-, -6,8- oder -7,8-diol,
2,5-Diethyloctan-1;2-, -1,3-, -1,4-, -1,5-, -1,6-, -1,7-, -1,8-, -2,3-, -2,4-, -2,5-, -2,6-, -2,7-, -2,8-, -3,4-, -3,5-, -3,6-, -3,7-, -3,8-, -4,5-, -4,6-, -4,7-, -4,8-, 5,6 -, -5,7-, -5,8-, -6,7-, -6,8- oder -7,8-diol,
2,6- Diethyloctan-1,2-, -1,3-, -1,4-, -1,5-, -1,6-, -1,7-, -1,8-, -2,3-, -2,4-, -2,5-, -2,6-, -2,7-, -2,8-, -3,4-, -3,5-, -3,6-, -3,7-, -3,8 -, -4,5-, -4,6-, -4,7-, -4,8-, -5,6 -, -5,7-, -5,8-, -6,7-, -6,8- oder -7,8-diol,
2,7- Diethyloctan-1,2-, -1,3-, -1,4-, -1,5-, -1,6-, -1,7-, -1,8-, -2,3-, -2,4-, -2,5-, -2,6-, -2,7-, -2,8-, -3,4-, -3,5-, -3,6-, -3,7-, -3,8 -, -4,5-, -4,6-, -4,7-, -4,8-, -5,6 -, -5,7-, -5,8-, -6,7-, -6,8- oder -7,8-diol,
3,4-Diethyloctan-1,2-, -1,3-, -1,4-, -1,5-, -1,6-, -1,7-, -1,8-, -2,3-, -2,4-, -2,5-, -2,6-, -2,7-. -2,8-, -3,4-, -3,5-, -3,6-, -3,7-, -3,8 -, -4,5-, -4,6-, -4,7-, -4,8-, -5,6 -, -5,7-, -5,8-, -6,7-, -6,8- oder -7,8-diol,
3,5-Diethyloctan-1,2-, -1,3-, -1,4-, -1,5-, -1,6-, -1,7-, -1,8-, -2,3-, -2,4-, -2,5-, -, -2,6-, -2,7-, -2,8-, -3,4-, -3,5-, -3,6-, -3,7-, -3,8 -, -4,5-, -4,6-, -4,7-, -4,8-, -5,6 -, -5,7-, -5,8-, -6,7-, -6,8- oder -7,8-diol,
3,6-Diethyloctan-1,2-, -1,3-, -1,4-, -1,5-, -1,6-, -1,7-, -1,8-, -2,3-, -2,4-, -2,5-, -, -2,6-, -2,7-, -2,8-, -3,4-, -3,5-, -3,6-, -3,7-, -3,8 -, -4,5-, -4,6-, -4,7-, -4,8-, -5,6 -, -5,7-, -5,8-, -6,7-, -6,8- oder -7,8-diol oder um
4,5-Diethyloctan-1,2-, -1,3-, -1,4-, -1,5-, -1,6-, -1,7-, -1,8-, -2,3-, -2,4-, -2,5-, -2,6-, -2,7-, -2,8-, -3,4-, -3,5-, -3,6-, -3,7-, -3,8 -, -4,5-, -4,6-, -4,7-, -4,8-, -5,6 -, -5,7-, -5,8-, -6,7-, -6,8- oder -7,8-diol

handelt.

Die erfindungsgemäß zu verwendenden stellungsisomeren Diethyloctandiole können als einzelne Verbindungen oder als Gemische von zwei oder mehr Diethyloctandiolen für die Herstellung der erfindungsgemäßen Oligomeren und Polymeren verwendet werden. Besondere Vorteile resultieren aus der Verwendung von 2,4-Diethyloctan-1,5-diol.

Die vorstehend beschriebenen funktionalisierten Alkane sind an sich bekannte Verbindungen und können mit Hilfe üblicher und bekannter Synthesemethoden der Organischen Chemie, wie die basenkatalysierte Aldolkondensation, hergestellt werden oder sie fallen als Nebenprodukte chemischer Großsynthesen, wie der Herstellung von 2-Ethyl-hexanol, an (vgl. die deutschen Patentanmeldungen DE 199 40 855 A 1, Spalte 12, Zeile 43, bis Spalte 14, Zeile 47, DE 198 09 643 A 1, Seite 2, Zeile 31, bis Seite 3, Zeile 15, DE 198 50 243 A 1, Seite 6, Zeile 46, bis Seite 7, Zeile 29, DE 199 24 674 A 1, Spalte 6, Zeile 34, bis Spalte 7, Zeile 45, DE 198 55 167 A 1, Seite 2, Zeilen 28 bis 67, oder DE 199 38 758 A 1, Seite 2, Zeile 47, bis Seite 3, Zeile 18).

Die vorstehend beschriebenen funktionalisierten Alkane sind in den Beschichtungsstoffen (B) vorzugsweise in einer Menge von 0,1 bis 20, bevorzugt 0,5 bis 15, besonders bevorzugt 1,0 bis 10, ganz besonders bevorzugt 1,5 bis 5 und insbesondere 1,5 bis 4 Gew.%, bezogen auf dem Beschichtungsstoff (B) enthalten.

Der erfindungsgemäße Verbund umfasst mindestens ein, insbesondere ein, Substrat (A), mindestens eine, insbesondere eine Beschichtung (B), mindestens eine, insbesondere eine, Klebschicht (C) und mindestens eine, insbesondere eine, Scheibe (D).

Das Substrat (A) kann aus beliebigen Materialien bestehen. Vorzugsweise werden die Materialien aus der Gruppe, bestehend aus Metallen, Gläsern, Kunststoffen, natürlichen und künstlichen Mineralien, Keramiken, Beton, Zement, Ton, Holz, Papier, Leder, Textil und Verbunden dieser Materialien, insbesondere aus Metallen und Kunststoffen, ausgewählt. Besonders bevorzugt werden Metalle aus der Gruppe, bestehend aus Eisen, Stahl, Edelstahl, verzinktem Stahl oder Aluminium, ausgewählt.

Demnach kann es sich bei den Substraten um Kraftfahrzeugkarosserien oder Teilen hiervon, Bauwerke im Innen- und Außenbereich oder Teilen hiervon, Fenster, Türen, Möbel oder Bauteile für weiße Ware, vorzugsweise Kraftfahrzeugkarosserien, insbesondere PKW-Karosserien, und Teilen hiervon handeln. Weitere Beispiele geeigneter Substrate sind aus den deutschen Patentanmeldungen DE 199 24 172 A 1, Seite 8, Zeilen 21 bis 37, oder DE 199 30 067 A 1, Seite 13, Zeile 61, bis Seite 14, Zeile 16, bekannt.

Zur Herstellung des erfindungsgemäßen Verbundes wird mindestens ein, insbesondere ein, Beschichtungsstoff (B), der die vorstehend beschriebenen erfindungsgemäß zu verwendenden funktionalisierten Alkane enthält, auf das Substrat (A) appliziert, wodurch die Schicht (B) resultiert.

Das Substrat (A) kann unbeschichtet oder vorbeschichtet sein. Vorzugsweise ist es vorbeschichtet. Beispiele geeigneter Vorbeschichtungen (B-n) sind übliche und bekannte Primer und übliche und bekannte, nicht ausgehärtete Elektrotrauchlackschichten; Füller oder Vorstufen von Steinschlagschutzgrundierungen und Basislackschichten. Die Vorbeschichtungen (B-n) können aber auch ausgehärtet sein, so dass sie als Elektrotauchlackierungen, Fülledackierungen oder Steinschtagschutzgrundierungen und Basistackierungen vorliegen. Vorzugsweise sind die Vorbeschichtungen (B-n), insbesondere die Basislackierungen, nicht ausgehärtet, sondern werden in einem weiteren Verfahrenschritt gemeinsam mit der aus dem Beschichtungsstoff (B) hergestellten Schicht (B) gehärtet, was von der Fachwelt auch als Nass-innass Verfahren bezeichnet wird. Die entsprechenden Verfahren sind beispielsweise aus der deutschen Patentanmeldung DE 199 45 574 A 1, Seite 14, Zeile 7, bis Seite 15, Seite 17, bekannt.

Der Beschichtungsstoff (B) kann physikalisch, thermisch, mit aktinischer Strahlung oder thermisch und mit aktinischer Strahlung härtbar sein. Er kann ein konventioneller Beschichtungsstoff auf Basis organischer Lösemittel, ein wässriger Beschichtungsstoff, ein im wesentlichen oder völlig wasser- und lösemittelfreier, flüssiger Beschichtungsstoff (100%-System) oder feinteiliger, fester Beschichtungsstoff (Pulverlack) oder eine wässrige Suspension feinteiliger, fester Partikel (Pulverslurry) sein. Vorzugsweise ist der Beschichtungsstoff (B) ein Klarlack.

Als Klarlacke (B) zur Herstellung der Klarlackierungen (B) kommen alle üblichen und bekannten Einkomponenten(1K)-, Zweikomponenten(2K)- oder Mehrkomponenten(3K, 4K)-Klartacke, Pulverklarlacke, Pulverslurry-Klarlacke oder UV-härtbaren Klarlacke in Betracht.

Thermisch härtbare Einkomponenten(1K)-, Zweikomponenten(2K)- oder Mehrkomponenten(3K, 4K)-Klarlacke sind aus den Patentanmeldungen DE 42 04 518 A 1, EP 0 594 068 A 1, EP 0 594 071 A 1, EP 0 594 142 A 1; EP 0 604 992 A 1 oder EP 0 596 460 A 1, den internationalen Patentanmeldungen WO 94/10211, WO 94/10212, WO 94/10213, WO 94/22969 oder WO 92/22615 oder den amerikanischen Patentschriften US 5,474,811 A, US 5,356,669 A oder US 5,605,965 A bekannt.

Einkomponenten(1K)-Klarlacke enthalten bekanntermaßen hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamat- und/oder Allophanatgruppen und carbamat- und/oder allophanatmodifizerte Aminoplastharze als Vernetzungsmittel (vgl. die amerikanischen Patentschriften US 5,474,811, US 5,356,669 A oder US 5,605,965 A, die internationalen Patentanmeldungen WO 94/10211, WO 94/10212 oder WO 94/10213 oder die europäischen Patentanmeldungen EP 0 594 068 A 1, EP 0 594 071 A 1 oder EP 0 594 142 A 1).

Zweikomponenten(2K)- oder Mehrkomponenten(3K, 4K)-Klarlacke enthalten als wesentliche Bestandteile bekanntermaßen hydroxylgruppenhaltige Bindemittel und Polyisocyanate als Vernetzungsmittel, welche bis zu ihrer Verwendung getrennt gelagert werden.

Thermisch härtbare Pulverklarlacke sind beispielsweise aus der deutschen Patentanmeldung DE 42 22 194 A 1, der Produkt-Information der Firma BASF Lacke + Farben AG, "Pulverlacke", 1.990 oder der Firmenschrift von BASF Coatings AG "Pulverlacke, Pulverlacke für industrielle Anwendungen", Januar 2000, bekannt.

Pulverklarlacke enthalten als wesentliche Bestandteile bekanntermaßen epoxidgruppenhaltige Bindemittel und Polycarbonsäuren als Vernetzungsmittel.

Beispiele geeigneter Pulversluny-Klarlacke sind aus der US-Patentschrift US 4,268,542 A 1 und den Patentanmeldungen DE 195 40 977 A 1, DE 195 18 392 A 1, DE 196 17 086 A 1, DE 196 13 547 A 1, EP 0 652 264 A 1, DE 196 18 657 A 1, DE 196 52 813 A 1, DE 196 17 086 A 1 oder DE 198 14 471 A 1 bekannt.

Pulverslurry-Klarlacke enthalten bekanntermaßen Pulverklarlacke in einem wäßrigen Medium dispergiert.

Mit aktinischer Strahlung härtbare Klarlacke, Pulverklarlacke und Pulverslurry-Klarlacke gehen beispielsweise aus den europäischen Patentanmeldungen EP 0 928 800 A 1, EP 0 636 669 A 1, EP 0 410 242 A 1, EP 0 783 534 A 1, EP 0 650 978 A 1, EP 0 650 979 A 1, EP 0 650 985 A 1, EP 0 540 884 A 1, EP 0 568 967 A 1, EP 0 054 505 A 1 oder EP 0 002 866 A 1, den deutschen Patentanmeldungen DE 198 35 206 A 1, DE 197 09 467 A 1, DE 42 03 278 A 1, DE 33 16 593 A 1, DE 38 36 370 A 1, DE 24 36 186 A 1 oder DE 20 03 579 B 1, den internationalen Patentanmeldungen WO 97/46549 oder WO 99/14254 oder den amerikanischen Patentschriften US 5,824,373 A, US 4,675,234 A, US 4,634,602 A, US 4,424,252 A, US 4,208,313 A, US 4,163,810 A, US 4,129,488 A, US 4,064,161 A oder US 3,974,303 A hervor.

Thermisch und mit aktinischer Strahlung härtbare Klarlacke, Pulverklarlacke und Pulverslurry-Klarlacke gehen beispielsweise aus den Patentanmeldungen DE 198 18 735 A 1, WO 98/40170, DE 199 08 013 A 1, DE 199 08 018 A 1, EP 0 844 286 A 1 oder EP 0 928 800 A 1 hervor.

Insbesondere werden Klarlacke (B) verwendet, die als Bindemittel (Meth)Acrylatcopolymerisate mit isocyanatreaktiven funktionellen Gruppen und als Vernetzungsmittel blockierte oder unblockierte Polyisocyanate enthalten. Darüber hinaus können die Klarlacke (B) noch übliche und bekannte Zusatzstoffe enthalten. Klarlacke dieser Art sind beispielsweise aus den deutschen Patentanmeldungen DE 198 55 167 A 1, insbesondere Seite 16, Zeile 10, bis Seite 17, Zeile 58, DE 198 09 643 A 1, insbesondere Seite 8, Zeile 1, bis Seite 9, Zeile 47, DE 199 24 172 A 1, insbesondere Seite 8, Zeile 42, bis Seite 13, Zeile 36, oder DE 199 40 855 A 1, insbesondere Spalte 34, Zeile 31, bis Spalte 37, Zeile 44, bekannt.

Methodisch weist die Applikation der Beschichtungsstoffe (B) im ersten Verfahrenschritt keine Besonderheiten auf, sondern kann durch alle üblichen und bekannten, für das jeweilige Stoffgemisch geeigneten Applikationsmethoden, wie z.B. Elektrotauchlackieren, Spritzen, Sprühen, Rakeln, Streichen, Gießen, Tauchen, Träufeln oder Walzen erfolgen. Vorzugsweise werden Spritzapplikationsmethoden angewandt, es sei denn es handelt sich um Pulver.

Auch die Applikation der Pulver weist keine methodischen Besonderheiten auf, sondern erfolgt beispielsweise nach den üblichen und bekannten Wirbelschichtverfahren, wie sie beispielsweise aus den Firmenschriften von BASF Coatings AG, »Pulverlacke für industrielle Anwendungen«, Januar 2000, oder »Coatings Partner, Pulverlack Spezial«, 1/2000, oder Römpp Lexikon Lacke und Druckfarben, Georg Thieme Verlag, Stuttgart, New York, 1998, Seiten 187 und 188, »Elektrostatisches Pulversprühen«, »Elektrostatisches Sprühen« und »Elektrostatisches Wirbelbadverfahren«, bekannt sind.

Selbstverständlich können diese Methoden auch bei der Applikation der Beschichtungsstoffe (B-n) angewandt werden.

Auch die Härtung der resultierenden Schichten (B) im zweiten Verfahrenschritt weist keine methodischen Besonderheiten auf, sondern erfolgt - sofern es sich nicht um rein physikalisch härtende Schichten (B) handelt - mit Hilfe der üblichen und bekannten thermischen Methoden, wie Erhitzen in einem Umluftofen oder Bestrahlen mit IR-Lampen, sowie gegebenenfalls mit Hilfe der üblichen und bekannten Methoden der Strahlenhärtung, wie sie beispielsweise in der deutschen Patentanmeldung DE 198 18 735 A 1, Spalte 10, Seite 31, bis Spalte 11, Zeile 33, beschrieben werden. Selbstverständlich können diese Methoden auch bei der Härtung der Schichten (B-n) oder der gemeinsamen Härtung der Schichten (B) und (B-n) angewandt werden.

Vorzugsweise resultieren farb- und/oder effektgebende Mehrschichtlackierungen (B)/(B-n), wie sie üblicherweise für die Serienlackierung von Kraftfahrzeugen, insbesondere PKW, verwendet werden (vgl. auch die deutsche Patentanmeldung DE 199 38 758 A 1, Seite 10, Zeile 65, bis Seite 12, Seite 51).

In einem weiteren Verfahrenschritt wird auf die Beschichtung (B), in dem Bereich, indem das Substrat (A) mit der Scheibe (D) über die Beschichtung (B) und die Klebschicht (C) verbunden werden soll, ein Klebstoff (C) appliziert, wodurch die Klebstoffschicht (C) resultiert.

Vorzugsweise ist der Klebstoff (C) feuchtigkeitshärtend. Bevorzugt werden Klebstoffe (C) verwendet, die mindestens ein Polyisocyanat enthalten. Beispiele geeigneter Polyisocyanate sind aus den deutschen Patentanmeldungen DE 199 24 170 A 1, Spalte 2, Zeilen 6 bis 34, i. V. m. Spalte 3, Zeile 61, bis Spalte 6, Zeile 68, und Spalte 10, Zeile 57, bis Spalte 11. Zeile 38, DE 199 47 523 A 1, Seite 7, Zeile 56, Seite 8, Seite 13, oder DE 199 30 067 A 1, Seite 9, Zeile 53, bis Seite 10, Zeile 6, bekannt. Darüber hinaus kann der Klebstoff (C) übliche und bekannte Füllstoffe, wie Calciumcarbonat, Calciumsulfate, Magnesiumsulfat und/oder Siliziumdioxid und/oder Silikate, Pigmente wie Ruß, Polyalkylenglykole, UV-Absorber, Lösemittel und Weichmacher, wie Phthalsäureester, enthalten. Klebstoffe (C) dieser Art sind übliche und bekannte Produkte und werden beispielsweise von der Firma EFTEC, Schweiz, unter der Marke Togocoll ®, insbesondere Togocoll ® F 502 oder DA 101 F 1, der Firma GEX, Schweiz, unter der Marke Betaseal ®, insbesondere Betaseal ® 1865, oder von der Firma Sika, Schweiz, unter der Marke Sicaflex ®, insbesondere Sicaflex ® 250PC-C, vertrieben.

Vorzugsweise werden die Klebstoffe (C) in Form einer Raupe appliziert. Die Länge des Bereichs, in dem die Klebstoffe (C) appliziert werden, richtet sich in erster Linie nach der Länge der Scheibe (D) im Verbindungsbereich. Vorzugsweise liegt die Breite dieses Bereichs bei 0,5 bis 3, bevorzugt 0,75 bis 2 und insbesondere bei 0,75 bis 1,25 cm.

Nach der Applikation des Klebstoffs (C) wird die resultierende Klebschicht (C) mit der Scheibe (D) verbunden, wonach die Klebschicht (C) ausgehärtet wird. Die Dauer der Härtung kann breit variieren und richtet sich in erster Linie nach der Reaktivität des verwendeten Klebstoffs (C) und der Luftfeuchtigkeit. Vorzugsweise werden Temperaturen von Raumtemperatur bis 90 °C eingesetzt.

Als Scheiben (D) kommen grundsätzlich alle Scheiben in Betracht, wie sie üblicherweise in Kraftfahrzeugen, insbesondere Nutzfahrzeugen und PKW, verwendet werden. Vorzugsweise handelt es sich um die üblichen und bekannten Verbundglasscheiben.

Der erfindungsgemäße Verbund weist zahlreiche Vorteile auf. So sind seine anwendungstechnischen Eigenschaften weitgehend unabhängig von den bei seiner Herstellung herrschenden Bedingungen, insbesondere was Temperatur und Luftfeuchtigkeit betrifft. Er ist auch unter extremen Bedingungen auf Dauer fest und erleidet keine Beschädigungen, wie Risse oder Ablösungen. Vor allem ist der erfindungsgemäße Verbund auch bei hohen und niederen Temperaturen, hoher und niedriger Luftfeuchtigkeit sowie unter rasch zwischen diesen Extremen wechselnden Bedingungen, wie sie im Tropenklima und im Wüstenklima herrschen, bei hoher Strahlungsintensität und bei intensiver mechanischer und chemischer Belastung stabil und erleidet keine Beschädigung. Er ist daher in besonderem Maße als Bestandteil von Kraftfahrzeugkarosserien, insbesondere von Karosserien von Nutzfahrzeugen und PKW, geeignet.

Wegen seiner besonders hohen Qualität ist er vor allem als Bestandteil von PKW der Oberklasse geeignet.

### Beispiele und Vergleichsversuche

### Herstellbeispiele

### 1. Die Herstellung eines Methacrylatcopolymerisats

In einem Laborreaktor mit einem Nutzvolumen von 4 I, ausgestattet mit einem Rührer, zwei Tropftrichtern für die Monomermischung und Initiatorlösung, Stickstoffeinleitungsrohr, Thermometer und Rückflusskühler, wurden 897 g einer Fraktion aromatischer Kohlenwasserstoffe mit einem Siedebereich von 158 - 172 °C eingewogen. Das Lösemittel wurde auf 140 °C aufgeheizt. Nach Erreichen von 140 °C wurden eine Monomermischung aus 487 g t-Butylacrylat, 215 g n-Butylmethacrylat, 143 g Styrol, 572 g Hydroxypropylmethacrylat und 14 g Acrylsäure innerhalb von 4 Stunden, und eine Initiatorlösung von 86g t-Butylperoxyethylhexanoat in 86 g des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden bei 140 °C gehalten und danach abgekühlt. Die resultierende und mit einer Mischung aus 1-Methoxypropylacetat-2, Butylglykolacetat und Butylacetat verdünnte Polymerlösung hatte einen Feststoffgehalt von 53%, bestimmt in einem Umluftofen 1 h bei 130 °C, eine Säurezahl von 10 mg KOH/g Festkörper und eine Viskosität von 23 dPas (gemessen an einer 60%igen Anlösung der Polymerlösung in dem beschriebenen aromatischen Lösemittel, unter Verwendung eines ICI Platte-Kegel Viskosimeters bei 23 °C).

### 2. Die Herstellung einer Thixotropierpaste

In einer Laborrührwerksmühle der Firma Vollrath wurden 800 g Mahlgut, bestehend aus 592 g des Methacrylatcopolymerisats des Herstellbeispiels 1, 80 g Butylacetat, 64 g Xylol und 64 g Aerosil® 972 (Degussa AG, Hanau), zusammen mit 1100 g Quarzsand (Korngröße 0.7 - 1 mm) eingewogen und unter Wasserkühlung 30 Minuten lang angerieben.

### 3. Die Herstellung eines erfindungsgemäß zu verwendenden 2K-Klarlacks (Herstellbeispiel 3.1) und eines erfindungsgemäß nicht zu verwendenden 2K-Klarlacks (Herstellbeispiel 3.2)

Ein erfindungsgemäß zu verwendender 2K-Klarlack (Herstellbeispiel 3.1) und ein erfindungsgemäß nicht zu verwendender 2K-Klarlack (Herstellbeispiel 3.2) wurden aus den in der Tabelle 1 aufgeführten Bestandteilen durch Vermischen hergestellt und auf Prüftafeln appliziert. Als Prüftafeln wurden Stahltafeln aus Karosseriestahl verwendet, welche mit handelsüblicher Zinkphosphatlösung vorbehandelt und wie nachstehend beschrieben mit einem Elektrotauchlack und einem Füller beschichtet worden waren.

**Tabelle 1: Zusammensetzung des erfindungsgemäß zu verwendenden 2K-Klarlacks des Herstellbeispiels 3.1 und des erfindungsgemäß nicht zu verwendenden 2K-Klarlacks des Herstellbeispiels 3.2**

| **Bestandteile** | **Herstellbeispiele:** | |
|---|---|---|
| | **3.1** | **3.2** |
| **Stammlack** | **(Gew.-Teile)** | **(Gew.-Teile)** |
| Bindemittel | | |
| Methacrylatcopolymerisat des Herstellbeispiels 1 | 61,9 | 60,4 |
| **2,4-Diethyloctan-1,5-diol** | **3,0** | - |
| Setalux® C91756 | | |
| (Akzo Nobel Resins, | | |
| Bergen op Zoom) | 13,5 | 13,5 |
| Thixotropierpaste des Herstellbeispiels 2 | 5,0 | 5,0 |

| Weitere Bestandteile | | |
|---|---|---|
| Substituiertes Hydroxyphenyltriazin (65 %ig in Xylol) | 1,5 | 1,5 |
| N-Methyl-2,2,6,6-tetramethylpiperydinylester | 1,0 | 1,0 |
| Byk® 306 (Byk Chemie) | 0,2 | 0,2 |
| Byk® 310 (Byk Chemie) | 0,15 | 0,15 |
| Byk® ES 80 (Byk Chemie) | 0,2 | 0,2 |
| Butanol | 1,5 | 1,5 |
| Xylol | 2,45 | 2,7 |
| Ethoxypropylacetat | 2.0 | 2.0 |
| Butylglykolacetat | 5.6 | 6.85 |
| Glykolsäurebutylester | 5.0 | 5.0 |
| Vernetzungsmittel | 33 | 33 |

Das Vernetzungsmittel ist eine Anlösung eines Polyisocyanats auf der Basis Hexamethylendiisocyanat (80%-ige Anlösung von Desmodur® N 3390 der Firma Bayer AG in Butylacetat/Solventnaphta ®).

Setalux® C91756 ist ein Harnstoffderivat in einem Bindemittel gelöst bzw. dispergiert.

### 4. Die Herstellung einer erfindungsgemäß zu verwendenden farb- und effektgebenden Mehrschichtlackierung (Herstellbeispiel 4.1) und einer erfindungsgemäß nicht zu verwendenden farb- und effektgebenden Mehrschichtlackierung (Herstellbeispiel 4.2)

Für die Herstellung der erfindungsgemäß zu verwendenden Mehrschichtlackierung des Herstellbeispiels 4.1 wurde der Klarlack des Herstellbeispiels 3.1 verwendet.

Für die Herstellung der erfindungsgemäß nicht zu verwendenden Mehrschichtlackierung des Herstellbeispiels 4.2 wurde der Klarlack des Herstellbeispiels 3.2 verwendet.

Zur Herstellung der Prüftafeln mit den Mehrschichtlackierungen 4.1 und 4.2 wurden nacheinander jeweils ein handelsüblicher Elektrotauchlack von BASF Coatings AG mit einer Schichtdicke von 18 - 22 µm und ein handelsüblicher Wasserfüller von BASF Coatings AG mit einer Schichtdicke von 35 - 40 µm appliziert und eingebrannt. Hierbei wurden der Elektrotauchlack während 20 Minuten bei 170 °C und der Füller während 20 Minuten bei 160°C eingebrannt. Anschließend wurde ein silberner Wasserbasislack mit einer Schichtdicke von 12 - 15 µm aufgetragen und während 10 Minuten bei 80°C abgelüftet. Abschließend wurden die Klarlacke 3.1 und 3.2 jeweils mit einer Schichtdicke von 40 - 45µm und jeweils in einem Einmalauftrag elektrostatisch appliziert (Glockentyp: Ecobell).

Danach wurden die Wasserbasislackschicht und die Klarlackschichten 3.1 und 3.2
- in einer ersten Serie während 24 Minuten bei 140°C gehärtet,
- in einer zweiten Serie während 24 Minuten bei 160 °C gehärtet (Überbrennung),
- in einer dritten Serie dreimal während 24 Minuten bei 140°C gehärtet und
- in einer vierten Serie dreimal während 24 Minuten bei 160 °C gehärtet (Überbrennung).

### Beispiel 1 und Vergleichsversuch V 1

### Scheibenverklebungshaftung der Mehrschichtlackierung 4.1 des Herstellbeispiels 4.1 (Beispiel 1) und der Mehrschichtlackierung 4.2 des Herstellbeispiels 4.2 (Vergleichsversuch V 1)

Für die Bestimmung der Scheibenverklebungshaftung wurden die Mehrschichtlackierung des Herstellbeispiels 4.1 (Beispiel 1) und die Mehrschichtlackierung des Herstellbeispiels 4.2 (Vergleichsversuche V 1 Herstellbeispiels wie folgt vorbehandelt:

### 1. Wasserlagerung:

Die Prüftafeln wurden während 16 Stunden bei 63 °C in deionisiertem Wasser gelagert.

### 2. Temperaturbelastung:

Die Prüftafeln wurden während 72 Stunden bei 80 °C in einem Umluftofen gelagert.

### 3. Feuchtigkeitsbelastung:

Die Prüftafeln wurden während 21 Tage bei einer relativen Luftfeuchtigkeit von 80% und einer Temperatur von 27 °C in einem Klimaschrank gelagert.

Anschließend wurden auf allen Prüftafeln quer über die Schmalseite Klebstreifen angebracht.

Auf zwei Poylethylenfolien-Unterlagen pro Prüfblech wurden mit einer Dreiecksdüse ein handelsüblicher Scheibenklebstoff (Togocoll ® F 502 der Firma EFTEC, Schweiz) in einer Breite von 10 mm und einer Länge von 150 mm raupenförmig aufgetragen. Man ließ die Raupen während einer Minute unter Normalklimabedingungen antrocknen. Anschließend wurden die Raupen auf die Prüfbleche übertragen. Dabei wurden ein jeweils Ende einer Raupe auf den Klebstreifen gelegt, sodass nach der Härtung die Raupen leicht mit einer Spitzzange zu fassen waren und zur Durchführung der Schälhaftungsprüfung abgezogen werden konnten. Nach dem Aufbringen der Raupen wurden beidseitig der Raupen Abstandshalter aufgelegt. Auf die Polyethylenfolien-Rückseiten und die Abstandshalter wurden Bondertafeln aufgelegt. Durch manuelles Anpressen wurden die Raupen auf eine Schichtdicke von 5 mm eingestellt. Die Polyethylenfolien und die Bondertafeln verblieben während sieben Tage bei 23 °C und 50% relativer Luftfeuchtigkeit im Normklimaraum zur Aushärtung. Nach sieben Tage wurden die Polyethylenfolien und die Bondertafeln entfernt. Die ausgehärteten Raupen wurden "am Kopf", d. h., dort wo sie auf den Klebstreifen auflagen mit einer Spitzzange erfasst und in einem Winkel von 90° von der Haftfläche abgezogen. Nach jeweils 10 mm Abzugslänge wurde das Material in der Bruchzone mit einem Messer bis auf die Oberfläche der Klarlackierungen angeschnitten und danach weiter abgezogen.

Die Trennflächen wurden visuell beurteilt. Dabei ist es maßgebend, dass möglichst ein vollständiger kohäsiver Bruch in der Raupe auftrat, entsprechend einer möglichst vollständigen Haftung der Raupe auf der Mehrschichtlackierung. Die Haftung wurde wie folgt benotet:

| Haftung | Note |
|---|---|
| 100 % | 1 |
| 75% | 2 |
| 50% | 3 |
| 25% | 4 |
| 0% | 5 |

Die Versuchsergebnisse finden sich in der Tabelle 2.

**Tabelle 2: die Scheibenverklebungshaftung der Mehrschichtlackierung 4.1 (Beispiel 1) und der Mehrschichtlackierung 4.2 (Vergleichsversuch V 1)**

| **Serie und Vorbehandlung** | **Beispiel 1 Vergleichsversuch V 1** | |
|---|---|---|
| | **Note** | **Note** |
| Erste Serie: | | |
| Wasserlagerung | 1 | 4 |
| Temperaturbelastung | 2 | 4 |

| | | |
|---|---|---|
| Feuchtigkeitsbelastung | 1 | 3 |

| Zweite Serie: | | |
|---|---|---|
| Wasserlagerung | 2 | 4 |
| Temperaturbelastung | 2 | 4 |
| Feuchtigkeitsbelastung | 1 | 3 |

| Dritte Serie: | | |
|---|---|---|
| Wasserlagerung | 2 | 4 |
| Temperaturbelastung | 2 | 3 |
| Feuchtigkeitsbelastung | 1 | 3 |

| Vierte Serie: | | |
|---|---|---|
| Wasserlagerung | 2 | 4 |
| Temperaturbelastung | 2 | 4 |
| Feuchtigkeitsbelastung | 2 | 4 |

Die Ergebnisse der Tabelle 2 untermauern, dass die Mehrschichtlackierung 4. 1 (Beispiel 1) eine überlegene Scheibenverklebungshaftung aufwies.

## Patentansprüche

1. Verwendung von polyhydroxyfunktionalisierten cyclischen und/oder acyclischen Alkanen mit 9 bis 16 Kohlenstoffatomen als Haftvermittler in Verbunden, umfassen mindestens ein Substrat (A), mindestens eine Beschichtung (B), mindestens eine Klebschicht (C) und mindestens eine Scheibe (D), wie sie üblicherweise in Kraftfahrzeugen, insbesondere Nutzfahrzeugen und PKW, verwendet wird, insbesondere eine Verbundglasscheibe.

2. Verwendung nach Anspruch 1, **dadurch gekennzeichnet, dass** die Alkane den Beschichtungsstoffen (B) vorliegen, aus denen die Beschichtungen (B) hergestellt werden.

3. Verwendung nach Anspruch 1 oder 2, **dadurch gekennzeichnet, dass** das Alkan mit mindestens zwei Hydroxylgruppen funktionalisiert ist.

4. Verwendung nach einem der Ansprüche 1 bis 3, **dadurch gekennzeichnet, dass** das funktionalisierte Alkan acyclisch ist.

5. Verwendung nach einem der Ansprüche 1 bis 4, **dadurch gekennzeichnet, dass** das funktionalisierte Alkan primäre und sekundäre Hydroxylgruppen aufweist.

6. Verwendung nach einem der Ansprüche 1 bis 5, **dadurch gekennzeichnet, dass** die funktionalisierten Alkane stellungsisomere Dialkyloctandiole sind.

7. Verwendung nach Anspruch 6, **dadurch gekennzeichnet, dass** die stellungsisomeren Dialkyloctandiole stellungsisomere Diethyloctandiole sind.

8. Verwendung nach Anspruch 7, **dadurch gekennzeichnet, dass** das stellungsisomere Diethyloctandiol ein 2,3-, 2,4-, 2,5-, 2,6-, 2,7-, 3,4-, 3,5-, 3,6- oder 4,5-Diethyloctandiol ist.

9. Verwendung nach Anspruch 8, **dadurch gekennzeichnet, dass** das stellungsisomere Diethyloctandiol ein 2,4-Diethyloctandiol ist.

10. Verwendung nach einem der Ansprüche 7 bis 9, **dadurch gekennzeichnet, dass** das stellungsisomere Diethyloctandiol ein Diethyloctan-1,2-, -1,3-, -1,4-, -1,5-, -1,6-, -1,7-, -1,8-, -2,3-, -2,4-, -2,5 -, -2,6-, -2,7-, -2,8-, -3,4-, -3,5-, -3,6-, -3,7-, -3,8 -, -4,5-, -4,6-, -4,7-, -4,8-, -5,6 -, -5,7-, -5,8-, -6,7-, -6,8- oder -7,8-diol ist.

11. Verwendung nach Anspruch 10, **dadurch gekennzeichnet, dass** das stellungsisomere Diethyloctandiol ein Diethyloctan-1,5-diol ist.

12. Verwendung nach Anspruch 11, **dadurch gekennzeichnet, dass** das stellungsisomere Diethyloctandiol 2,4-Diethyloctan-1,5-diol ist.

13. Verbund, umfassend mindestens ein Substrat (A), mindestens eine Beschichtung (B), mindestens eine Klebschicht (C) und mindestens eine Scheibe (D), wie sie üblicherweise in Kraftfahrzeugen, insbesondere Nutzfahrzeugen und PKW, verwendet wird, insbesondere eine Verbundglasscheibe, herstellbar, indem man
(I) einen physikalisch, thermisch, mit aktinischer Strahlung oder thermisch und mit aktinischer Strahlung härtbaren Beschichtungsstoff (B), enthaltend mindestens ein polyhydroxyfunktionalisiertes cyclisches und/oder acyclisches Alkan, wie in den Ansprüchen 1 bis 12 definiert, auf ein unbeschichtetes oder vorbeschichtetes Substrat (A) appliziert, wodurch die Schicht (B) resuliert,
(II) die Schicht (B) für sich alleine oder zusammen mit mindestens einer darunter befindlichen Schicht (B-n) aus einem anderen Beschichtungsstoff (B-n) härtet, wodurch die Beschichtung (B) oder (B)/(B-n) resultiert,
(III) auf die Beschichtung (B), in dem Bereich, in dem das Substrat (A) mit der Scheibe (D) über die Beschichtung (B) und die Klebschicht (C) verbunden werden soll, einen Klebstoff (C) appliziert, wodurch die Klebstoffschicht (C) resultiert, und
(IV) die Klebstoffschicht (C) mit der Scheibe verbindet und aushärtet, wodurch die Klebschicht (C) resultiert.

14. Verbund nach Anspruch 14, **dadurch gekennzeichnet, dass** das Substrat (A) aus einem Material, ausgewählt aus der Gruppe, bestehend aus Metallen, Gläsem, Kunststoffen, natürlichen und künstlichen Mineralien, Keramiken, Beton, Zement, Ton, Holz, Papier, Leder, Textil und Verbunden dieser Materialien, besteht.

15. Verbund nach Anspruch 14, **dadurch gekennzeichnet, dass** das Material aus der Gruppe, bestehend aus Metallen und Kunststoffen, ausgewählt wird.

16. Verbund nach einem der Ansprüche 13 bis 15, **dadurch gekennzeichnet, dass** das Substrat eine Kraftfahrzeugkarosserie oder ein Teil hiervon ist.

17. Verbund nach einem der Ansprüche 13 bis 16, **dadurch gekennzeichnet, dass** der Beschichtungsstoff (B) ein konventioneller Beschichtungsstoff auf Basis organischer Lösemittel, eine wässriger Beschichtungsstoff, ein im wesentlichen oder völlig wasser- und lösemittelfreier, flüssiger Beschichtungsstoff (100%-System) oder feinteiliger, fester Beschichtungsstoff (Pulverlack) oder eine wässrige Suspension feinteiliger, fester Partikel (Pulverslurry) ist.

18. Verbund nach einem der Ansprüche 13 bis 17, **dadurch gekennzeichnet, dass** der Beschichtungsstoff (B) ein Klarlack und die Beschichtung (B) eine Klarlackierung ist.

19. Verbund nach einem der Ansprüche 13 bis 18, **dadurch gekennzeichnet, dass** der Klebstoff (C) feuchtigkeitshärtend ist.

20. Verbund nach Anspruch 19, **dadurch gekennzeichnet, dass** der Klebstoff (C) mindestens ein Polyisocanat enthält.

21. Verbund nach einem der Ansprüche 13 bis 20, **dadurch gekennzeichnet, dass** die Scheibe (D) eine Verbundglasscheibe ist.

22. Verbund nach einem der Ansprüche 13 bis 21, **dadurch gekennzeichnet, dass** die Schichten (B-n) aus der Gruppe, bestehend aus Primer, Elektrotauchlackschichten, Füllerschichten und Basislackschichten, ausgewählt werden.

23. Verbund nach Anspruch 22, **dadurch gekennzeichnet, dass** die Beschichtungen (B-n) aus der Gruppe, bestehend aus Primer, Elektrotauchladcierungen, Fülleriackierungen oder Steinschlagschutzgrundierungen und Basislackierungen, ausgewählt werden.

## Claims

1. Use of polyhydroxy-functionalized cyclic and/or acyclic alkanes having from 9 to 16 carbon atoms as adhesion promoters in composites comprising at least one substrate (A), at least one coating (B), at least one adhesive film (C), and at least one sheet (D), such as is commonly used in motor vehicles, especially commercial vehicles and automobiles, especially a laminated glass sheet.

2. Use according to Claim 1, **characterized in that** the alkanes are present in the coating materials (B) from which the coatings (B) are produced.

3. Use according to Claim 1 or 2, **characterized in that** the alkane is functionalized with at least two hydroxyl groups.

4. Use according to any of Claims 1 to 3, **characterized in that** the functionalized alkane is acyclic.

5. Use according to any of Claims 1 to 4, **characterized in that** the functionalized alkane contains primary and secondary hydroxyl groups.

6. Use according to any of Claims 1 to 5, **characterized in that** the functionalized alkanes are positionally isomeric dialkyloctanediols.

7. Use according to Claim 6, **characterized in that** the positionally isomeric dialkyloctanediols are positionally isomeric diethyloctanediols.

8. Use according to Claim 7, **characterized in that** the positionally isomeric diethyloctanediol is a 2,3-, 2,4-, 2,5-, 2,6-, 2,7-, 3,4-, 3,5-, 3,6- or 4,5-diethyloctanediol.

9. Use according to Claim 8, **characterized in that** the positionally isomeric diethyloctanediol is a 2,4-diethyloctanediol.

10. Use according to any of Claims 7 to 9, **characterized in that** the positionally isomeric diethyloctanediol is a diethyloctane-1,2-, -1,3-, -1,4-, -1,5-, -1,6-, -1,7-, -1,8-, -2,3-, -2,4-, -2,5-, -2,6-, -2,7-, -2,8-, -3,4-, -3,5-, -3,6-, -3,7-, -3,8-, -4,5-, -4,6-, -4,7-, -4,8-, -5,6-, -5,7-, -5,8-, -6,7-, -6,8- or -7,8-diol.

11. Use according to Claim 10, **characterized in that** the positionally isomeric diethyloctanediol is a diethyloctane-1,5-diol.

12. Use according to Claim 11, **characterized in that** the positionally isomeric diethyloctanediol is a 2,4-diethyloctane-1,5-diol.

13. Composite comprising at least one substrate (A), at least one coating (B), at least one adhesive film (C), and at least one sheet (D), such as is commonly used in motor vehicles, especially commercial vehicles and automobiles, especially a laminated glass sheet, producible by
(I) applying a coating material (B) curable physically, thermally, with actinic radiation, or thermally and with actinic radiation and comprising at least one polyhydroxy-functionalized cyclic and/or acyclic alkane, as defined in Claims 1 to 12, to an uncoated or precoated substrate (A) to give the film (B),
(II) curing the film (B) on its own or together with at least one underneath film (B-n) of another coating material (B-n) to give the coating (B) or (B) / (B-n),
(III) applying to the coating (B), in the region in which the substrate (A) is to be joined to the sheet (D) via the coating (B) and the adhesive film (C), an adhesive (C) to give the glue film (C), and
(IV) joining the glue film (C) to the sheet and curing it to give the adhesive film (C).

14. Composite according to Claim 14, **characterized in that** the substrate (A) is composed of a material selected from the group consisting of metals, glasses, plastics, natural and artificial minerals, ceramics, concrete, cement, clay, wood, paper, leather, textile, and composites of these materials.

15. Composite according to Claim 14, **characterized in that** the material is selected from the group consisting of metals and plastics.

16. Composite according to any of Claims 13 to 15, **characterized in that** the substrate is a motor vehicle body or a part thereof.

17. Composite according to any of Claims 13 to 16, **characterized in that** the coating material (B) is a conventional coating material based on organic solvents, an aqueous coating material, a substantially or completely water- and solvent-free, liquid coating material (100% system) or finely divided solid coating material (powder coating material), or an aqueous suspension of finely divided solid particles (powder slurry).

18. Composite according to any of Claims 13 to 17, **characterized in that** the coating material (B) is a clearcoat material and the coating (B) is a clearcoat.

19. Composite according to any of Claims 13 to 18, **characterized in that** the adhesive (C) is moisture curing.

20. Composite according to Claim 19, **characterized in that** the adhesive (C) comprises at least one polyisocyanate.

21. Composite according to any of Claims 13 to 20, **characterized in that** the sheet (D) is a laminated glass sheet.

22. Composite according to any of Claims 13 to 21, **characterized in that** the films (B-n) are selected from the group consisting of primer, electrocoat films, surfacer films and basecoat films.

23. Composite according to Claim 22, **characterized in that** the coatings (B-n) are selected from the group consisting of primer, electrocoats, surfacer coats or antistonechip primer coats and basecoats.

## Revendications

1. Utilisation d'alcanes cycliques et/ou acycliques à fonctionnalité polyhydroxy, comprenant 9 à 16 atomes de carbone comme promoteur d'adhérence dans des composites, comprenant au moins un substrat (A), au moins un revêtement (B), au moins une couche adhésive (C) et au moins une vitre (D), telle qu'usuellement utilisée dans des véhicules automobiles, en particulier les véhicules utilitaires et les camions, en particulier une vitre en verre composite.

2. Utilisation selon la revendication 1, **caractérisée en ce que** les alcanes se trouvent dans les produits de revêtement (B) à partir desquels on réalise les revêtements (B).

3. Utilisation selon la revendication 1 ou 2, **caractérisée en ce que** l'alcane est fonctionnalisé par au moins deux groupements hydroxyle.

4. Utilisation selon l'une quelconque des revendications 1 à 3, **caractérisée en ce que** l'alcane fonctionnalisé est acyclique.

5. Utilisation selon l'une quelconque des revendications 1 à 4, **caractérisée en ce que** l'alcane fonctionnalisé présente des groupements hydroxyle primaires et secondaires.

6. Utilisation selon l'une quelconque des revendications 1 à 5, **caractérisée en ce que** les alcanes fonctionnalisés sont des dialkyloctanediols isomères de position.

7. Utilisation selon la revendication 6, **caractérisée en ce que** les dialkyloctanediols isomères de position sont des diéthyloctanediols isomères de position.

8. Utilisation selon la revendication 7, **caractérisée en ce que** le diéthyloctanediol isomère de position est un 2,3-diéthyloctanediol, un 2,4-diéthyloctanediol, un 2,5-diéthyloctanediol, un 2,6-diéthyloctanediol, un 2,7-diéthyloctanediol, un 3,4-diéthyloctanediol, un 3,5-diéthyloctanediol, un 3,6-diéthyloctanediol ou un 4,5-diéthyloctanediol.

9. Utilisation selon la revendication 8, **caractérisée en ce que** le diéthyloctanediol isomère de position est un 2,4-diéthyloctanediol.

10. Utilisation selon l'une quelconque des revendications 7 à 9, **caractérisée en ce que** le diéthyloctanediol isomère de position est un diéthyloctane-1,2-diol, un diéthyloctane-1,3-diol, un diéthyloctane-1,4-diol, un diéthyloctane-1,5-diol, un diéthyloctane-1,6-diol, un diéthyloctane-1,7-diol, un diéthyloctane-1,8-diol, un diéthyloctane-2,3-diol, un diéthyloctane-2,4-diol, un diéthyloctane-2,5-diol, un diéthyloctane-2,6-diol, un diéthyloctane-2,7-diol, un diéthyloctane-2,8-diol, un diéthyloctane-3,4-diol, un diéthyloctane-3,5-diol, un diéthyloctane-3,6-diol, un diéthyloctane-3,7-diol, un diéthyloctane-3,8-diol, un diéthyloctane-4,5-diol, un diéthyloctane-4,6-diol, un diéthyloctane-4,7-diol, un diéthyloctane-4,8-diol, un diéthyloctane-5,6-diol, un diéthyloctane-5,7-diol, un diéthyloctane-5,8-diol, un diéthyloctane-6,7-diol, un diéthyloctane-6,8-diol ou un diéthyloctane-7,8-diol,

11. Utilisation selon la revendication 10, **caractérisée en ce que** le diéthyloctanediol isomère de position est un diéthyloctane-1,5-diol.

12. Utilisation selon la revendication 11, **caractérisée en ce que** le diéthyloctanediol isomère de position est le 2,4-diéthyloctane-1,5-diol.

13. Composite comprenant au moins un substrat (A), au moins un revêtement (B), au moins une couche adhésive (C) et au moins une vitre (D), telle qu'usuellement utilisée dans les véhicules automobiles, en particulier les véhicules utilitaires et les camions, en particulier une vitre en verre composite, pouvant être réalisé en ce qu'on
(I) applique un produit de revêtement (B) durcissable par voie physique, thermique, par un rayonnement actinique ou par voie thermique et avec un rayonnement actinique, contenant au moins un alcane cyclique et/ou acyclique fonctionnalisé par polyhydroxy, tel que défini dans les revendications 1 à 12, sur un substrat (A) non revêtu ou revêtu au préalable, ce qui résulte en la couche (B),
(II) durcit la couche (B) seule ou conjointement avec au moins une couche sous-jacente (B-n) en un autre produit de revêtement (B-n), ce qui résulte en revêtement (B) ou (B)/(B-n),
(III) applique sur le revêtement (B) dans la zone dans laquelle le substrat (A) doit être assemblé avec la vitre (D) via le revêtement (B) et la couche adhésive (C), un adhésif (C), ce qui résulte en la couche adhésive (C), et
(IV) assemble la couche adhésive (C) avec la vitre et on durcit, ce qui résulte en la couche adhésive (C).

14. Composite selon la revendication 14, **caractérisé en ce que** le substrat (A) est constitué par un matériau choisi dans le groupe constitué par les métaux, les verres, les matériaux synthétiques, les minéraux naturels et synthétiques, les céramiques, le béton, le ciment, l'argile, le bois, le papier, le cuir, le textile et les composites de ces matériaux.

15. Composite selon la revendication 14, **caractérisé en ce que** le matériau est choisi dans le groupe constitué par les métaux et les matériaux synthétiques.

16. Composite selon l'une quelconque des revendications 13 à 15, **caractérisé en ce que** le substrat est une carrosserie de véhicule automobile ou une partie de celle-ci.

17. Composite selon l'une quelconque des revendications 13 à 16, **caractérisé en ce que** le produit de revêtement (B) est un produit de revêtement traditionnel à base d'un solvant organique, un produit de revêtement aqueux, un produit de revêtement essentiellement ou complètement exempt d'eau et de solvant, liquide (système 100%) ou un produit de revêtement solide, finement divisé (laque en poudre) ou une suspension aqueuse de particules solides, finement divisées (suspension de poudre).

18. Composite selon l'une quelconque des revendications 13 à 17, **caractérisé en ce que** le produit de revêtement (B) est une laque claire et le revêtement (B) un laquage clair.

19. Composite selon l'une quelconque des revendications 13 à 18, **caractérisé en ce que** l'adhésif (C) durcit sous l'effet de l'humidité.

20. Composite selon la revendication 19, **caractérisé en ce que** l'adhésif (C) contient au moins un polyisocyanate.

21. Composite selon l'une quelconque des revendications 13 à 20, **caractérisé en ce que** la vitre (D) est une vitre en verre composite.

22. Composite selon l'une quelconque des revendications 13 à 21, **caractérisé en ce que** les couches (B-n) sont choisies dans le groupe constitué par les apprêts, les couches de laque par électro-immersion, les couches de charge et les couches de laque de base.

23. Composite selon la revendication 22, **caractérisé en ce que** les revêtements (B-n) sont choisis dans le groupe constitué par les apprêts, les laquages d'électro-immersion, les laquages de charge ou les apprêts résistants aux impacts par les gravillons et les laquages de base.
